# EUROPÄISCHE PATENTSCHRIFT

(11) **EP 0 531 737 B1**
(45) Veröffentlichungstag und Bekanntmachung des Hinweises auf die Patenterteilung: **26.06.1996**
(21) Anmeldenummer: 92113808.7
(22) Anmeldetag: 13.08.1992
(51) Int. Cl.: D02H 3/00, D02H 13/02, G05B 19/04

(54) **Konusschärmaschine**
Sectional warping machine
Ourdissoir sectionnel

(30) Priorität: 22.08.1991 DE 9110361 U
(43) Veröffentlichungstag der Anmeldung: 17.03.1993
(73) Patentinhaber: Hacoba Textilmaschinen GmbH & Co KG, D-42281 Wuppertal (DE)
(72) Erfinder: Kremer, Hubert, W-4155 Grefrath 1 (DE)
(74) Vertreter: Eichler, Peter, Dipl.-Ing.

(56) Entgegenhaltungen:
- EP-A- 0 344 115
- EP-A- 0 487 722
- AT-B- 358 492
- CH-A- 674 527
- DE-A- 2 631 573
- DE-A- 3 432 275
- US-A- 4 964 031

## Beschreibung

Die Erfindung bezieht sich auf eine Konusschärmaschine, bei der die Schärtrommel und/oder ein Support für ein Fadenleitriet unter Berücksichtigung des Konuswinkels und proportional der beim Aufwickeln der Fäden anwachsenden Wickeldicke seitlich zueinander verschieblich sind, bei der ein motorischer Vorschubantrieb von einer Steuereinrichtung in Abhängigkeit von mehreren schärwirksamen Parametern beaufschlagbar ist, deren für jeden Schärvorgang notwendige garnspezifische Daten aus einem für eine Vielzahl von Parameterdaten bestimmten Datenspeicher mit einer Selektionseinrichtung einlesbar sind, und bei der ein Trommelantrieb nach dem Einlesen von Parameterdaten einschaltbar ist.

Beim Schären wird eine Vielzahl von Fäden von einem Spulengatter auf die Trommel der Schärmaschine aufgewickelt. Das Aufwickeln kann bandweise erfolgen, wobei also zunächst ein erstes Fadenband mit parallelogrammförmigem Querschnitt aufgewickelt wird, wonach ein weiteres Fadenband oder mehrere weitere Fadenbänder aufgewickelt werden. Nach dem Beenden dieses Schärens werden alle Fäden gemeinsam umgebäumt, daß heißt mit einer motorisch angetriebenen Bäummaschine von der Schärtrommel auf einen Kettbaum gewickelt.

Damit ein Fadenband mit dem gewünschten parallelogrammförmigen Querschnitt auf die Trommel aufgewickelt werden kann, muß die Trommel und/oder der Support für ein Fadenleitriet unter Berücksichtigung des Konuswinkels und proportional der beim Aufwickeln der Fäden anwachsenden Wickeldicke seitlich verschoben werden. Hierzu dient der motorische Vorschubantrieb. Damit dieser Vorschubantrieb die beim Aufwickeln der Fäden anwachsende Wickeldicke berücksichtigen kann, ist es zweckmäßig, ihn mit einer Steuereinrichtung zu steuern, die schärwirksame Parameter berücksichtigt. Solche schärwirksamen Parameter sind beispielsweise die gewünschte Bandbreite, die gewünschte Kettdichte oder Walzenparameter, wenn beispielsweise gemäß dem Deutschen Patent 26 31 573 mit einer Walze geschärt wird, die das Schärband beim Schären auf die Schärtrommel preßt.

Im vorgenannten Zusammenhang ist es allgemein bekannt, Parameterdaten in einem Datenspeicher abzulegen und solche Daten mit der Selektionseinrichtung in die Steuereinrichtung einzulesen. Dieses Abspeichern und Einlesen erfolgt artikelbezogen, also gruppenweise im Hinblick auf eine bestimmte Art von Fadenkette, die später zu einem Stoff, dem Artikel, verwebt werden soll. Eine solche Kette bzw. Fadenschar hat also einen ganz bestimmten Datensatz aller schärwirksamer Parameter und zum Schären ist es von Bedeutung, daß es diesem Datensatz entsprechend auch tatsächlich durchgeführt wird. Hier kann es in der Praxis durchaus zu Fehlern kommen, wenn nicht nach jedem Schärvorgang oder aber mindestens nach jedem Bäumvorgang ein neuer Datensatz in die Steuereinrichtung gelangt. Der allgemeinste Fehlervorgang ist der, daß der Schärer meint, einen neuen Datensatz eingegeben zu haben, was aber nicht der Fall ist. Eine weitere Fehlermöglichkeit ist, daß der Schärer einen anderen Artikel bei nichtgeändertem Garn schärt und daher meint, keinen neuen Datensatz eingeben zu müssen.

Der Erfindung liegt daher die Aufgabe zugrunde, eine Konusschärmaschine der eingangs genannten Art so zu verbessern, daß der Schärer gezwungen wird, die richtige Einstellung der Konusschärmaschine artikelbezogen vorzunehmen.

Diese Aufgabe wird dadurch gelöst, daß der Trommelantrieb nach einem Schärvorgang und/oder nach einem Umbäumen der Schärkette erst dann wieder einschaltbar ist, wenn zuvor ein Neueinlesen von Parameterdaten in die Steuereinrichtung stattgefunden hat.

Für die Erfindung ist von Bedeutung, daß der Trommelantrieb erst dann wieder eingeschaltet werden kann, wenn sichergestellt ist, daß die Konusschärmaschine bzw. ihre Steuereinrichtung mit einem neuen, nämlich dem zutreffend artikelbezogenen Datensatz gestartet wird. Der Schärer ist also gezwungen, die Selektionseinrichtung zu bedienen, um die Maschine in Betrieb setzen zu können. Ein derartiger Bedienvorgang der Selektionseinrichtung kann nach einem Schärvorgang erzwungen werden. Es ist sinnvoll, jedenfalls nach einem Umbäumen erneut zu erzwingen, daß ein Datensatz in die Steuereinrichtung eingegeben wird, weil nach einem Umbäumen die eine größere Wahrscheinlichkeit besteht, daß die dann herzustellende Kette einen anderen Aufbau hat, als die zuvor geschärte Kette.

Eine zweckmäßige Ausgestaltung der Konusschärmaschine liegt vor, wenn der Trommelantrieb nach einem Schärvorgang dann wieder einschaltbar ist, wenn der Schärsupport oder die Trommel zum Nullpunkt zurück verstellt wurde. Unabhängig von der Art des Schärvorganges wird sichergestellt, daß jedenfalls bei Neubeginn des Wickelns einer Kette ein artikelbezogener Datensatz abgerufen wird.

Ein Zwang zum Betätigen der Selektionseinrichtung wird konstruktiv in vorteilhafter Weise dadurch erreicht, daß in einem Einschaltkreis des Trommelantriebs ein in Abhängigkeit von einer Betätigung der Selektionseinrichtung einschaltbares Schaltelement vorhanden ist. Es ist also erforderlich, ein Betätigungselement der Selektionseinrichtung mit einem Schaltelement des Einschaltkreises des Trommelantriebs wirkungsmäßig zu koppeln, nämlich im Einschaltsinne, um in einfacher Weise den gewünschten Betätigungszwang zu erreichen, d.h. daß vor einem Neubeginn des Schärens einer Kette wiederholt die Selektion durchgeführt werden muß.

Um das Schaltelement wiederholt nach einem Schärvorgang betätigen zu können, wird die Konusschärmaschine so ausgestaltet, daß das Schaltelement des Einschaltkreises des Trommelantriebs in Abhängigkeit von einem Stillsetzen des Trommelantriebs und/oder von einem Stillsetzen eines Umbäumantriebs ausschaltbar ist. Da dem Stillsetzen des Trommelantriebs und dem Stillsetzen des Umbäumantriebs Schaltelemente dienen, kann das Schaltelement des Einschaltkreises des Trommelantriebs durch einfache Wirkungskopplung mit den vorgenannten Schaltelementen in seine Ausschaltstellung gebracht werden, um dann erneut in Abhängigkeit von einer Betätigung der Selektionseinrichtung einschaltbar zu sein.

Dabei versteht es sich für die vorangesprochenen Ausführungsformen der Konusschärmaschine, daß sämtliche Funktionselemente für den Betrieb der Konusschärmaschine, soweit sie im Zusammenhang mit der Datenselektion bzw. mit dem davon abhängigen Schärvorgang in Beziehung stehen, eine zweckmäßige Ausgestaltung erfahren. Es müssen also keine mechanischen Schaltelemente verwendet werden, obgleich das möglich ist, sondern es können auch elektronische Schalter verwendet werden, oder es wird eine Softwarelösung eingesetzt, wobei alle denkbaren Möglichkeiten auch miteinander zu kombinieren sind. Das hängt von den sonst erforderlichen Gegebenheiten bei der Ausbildung der Konusschärmaschine ab, beispielsweise davon, ob das Schaltelement des Einschaltkreises als Lastschalter angesteuert werden soll, oder als Steuerelement für einen solchen Lastschalter od.dgl.

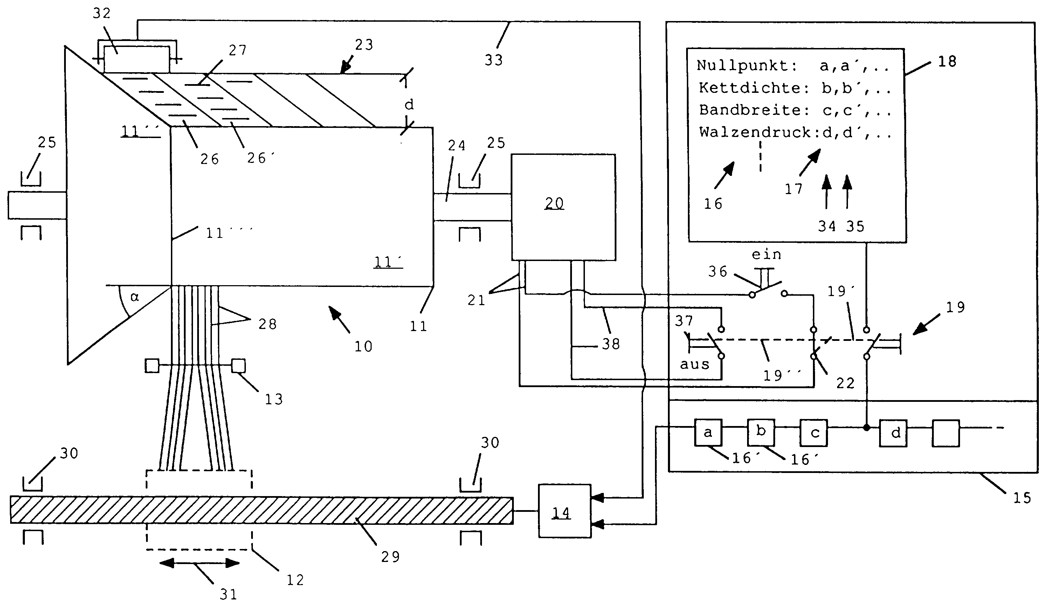

Die Erfindung wird anhand eines in der Zeichnung dargestellten Ausführungsbeispiels erläutert. Die Figur zeigt die wichtigsten Funktionselemente der Konusschärmaschine im Zusammenhang mit der Erfindung.

Die Figur zeigt eine allgemein mit 10 bezeichnete Konusschärmaschine, die eine Trommel 11 hat, welche mit einer Achse 24 beidendig in Lagern 25 eines nicht näher dargestellten Maschinengestells gelagert ist. Die Schärtrommel 11 ist mit einem motorischen Trommelantrieb 20 antreibbar. Die Schärtrommel 11 besitzt einen zylindrischen Teil 11', an den sich der Konus 11'' anschließt, mit dem nebeneinander parallelogrammförmig aufgewickelte Schärbänder 26,26' usw. abgestützt werden. Jedes Schärband 26,26' besteht aus einer Vielzahl von Lagen 27 übereinander gewickelter paralleler Fäden 28, die von nicht dargestellten Spulen eines Spulengatters abgezogen werden, indem die Schärtrommel 11 durch den Trommelantrieb 20 entsprechend angetrieben wird. Die Zufuhr der Fäden 28 erfolgt durch ein Fadenleitriet 13, das in herkömmlicher Weise für die Parallelität der Fäden 28 auf der Trommel 11 sorgt.

Damit das erste Band 26 richtig auf die Schärtrommel 11 aufgewickelt werden kann, müssen die Fäden 28 zu Beginn des Wickelprozesses wie dargestellt parallel zu der Übergangslinie 11''' zwischen dem zylinderförmigen Trommelteil 11' und dem Konus 11'' der Schärtrommel 11 ausgerichtet werden. Das ist der sogenannte Nullpunkt. Das Ausrichten erfolgt mit einem Support 12, der das Leitriet 13 trägt und trommelparallel verfahrbar ist. Der Support 12 befindet sich auf einer Gewindespindel 29, die in geeigneter Weise in vom nicht dargestellten Maschinengestell gebildeten Spindellagern 30 drehbar gelagert ist und von einem motorischen Vorschubantrieb 14 gedreht werden kann. Je nach Drehrichtung des Vorschubantriebs 14 wird der Support 12 in den Richtungen des Doppelpfeils 31 verstellt. Die Verstellung des Supports 12 muß so erfolgen, daß jede Lage 27 der Fäden 28 auf der Trommel 11 exakt parallel zu der sie abstützenden Fadenlage liegt, da sonst Aufwölbungen oder Vertiefungen entstehen, die das parallele Aufwickeln einer weiteren Fadenlage 27 verhindern. Aus der Geometrie des Konus 11'' ist ersichtlich, daß die Verschiebung des Supports 12 vom Konuswinkel α abhängig ist. Je kleiner dieser Winkel α ist, desto stärker muß der Support 12 in der Figur nach links verschoben werden, wobei angenommen wird, daß die anderen Einflußfaktoren konstant sind. Solche anderen Einflußfaktoren sind beispielsweise der Durchmesser der Fäden 28, oder die Spannung, mit der diese Fäden 28 aufgewickelt werden. Dementsprechend kann der Wickel 23 bzw. das Fadenband 26 unterschiedlich schnell dicker werden und der Support 12 muß dementsprechend angepaßt schneller oder weniger schnell verstellt werden. Um das Anwachsen des Fadenbandes 26 zu erfassen, ist eine supportfeste Walze 32 vorhanden, die auf dem Wickel 23 aufliegt. Ihr Zurückweichen beim Aufwickeln der Fäden 28 ist ein Maß für das Anwachsen der Wickeldicke d. Dementsprechend wirkt die Walze 32 in nicht dargestellter Weise über eine Wirkverbindung 33 auf den Vorschubantrieb 14 ein. Ein Beispiel der mechanischen Ausbildung der Walze 32, ihrer Meßwertaufnahme und ihrer Einflußnahme auf den Vorschubantrieb 14 ist in der Deutschen Patentschrift 26 31 573 dargestellt und wird hier darauf Bezug genommen. In dieser Patentschrift ist unter anderem beschrieben, daß die Walze 32 dazu benutzt werden kann, die Bänder 26,26' zu pressen, damit ein gleichmäßiger Wickelaufbau erreicht wird, der nötig ist, damit in allen Bändern 26,26' gleiche Fadenlängen aufgewickelt sind, was nötig ist, damit sich beim Umbäumen von der Wickeltrommel 11 auf einen nicht dargestellten Kettbaum einer ebenfalls nicht dargestellten Bäummaschine eine gleichmäßig lange Kette mit gleichmäßigen Spannungen ihrer Fadenbänder 26,26' bzw. aller Fäden 28 ergibt. Es versteht sich, daß ein derartiges Anpressen in Abhängigkeit von schärwirksamen Parametern erfolgen muß, nämlich in Abhängigkeit beispielsweise von der Breite eines Bandes 26. Darüber hinaus müssen aber auch unabhängig von dem Vorhandensein einer Walze 32 schärwirksame Parameter berücksichtigt werden, um richtig schären zu können, muß beispielsweise der Nullpunkt eingestellt werden, also die richtige Anordnung der Fäden 28 in Bezug auf die Übergangslinie 11''' zwischen dem zylindrischen Teil 11' der Trommel 11 und deren Konusteil 11''. Diese schärwirksamen Parameter sind in der Figur mit 16 bezeichnet. Sie wirken auf den Vorschubantrieb 14 mittels einer Steuereinrichtung 15, die diesen Parametern zugeordnete Anzeigeeinrichtungen 16' aufweist. Die Anzeigeeinrichtungen 16' werden beispielsweise durch einen herkömmlichen Bildschirm gebildet. Die Steuereinrichtung 15 steht über eine Selektionseinrichtung 19 mit einem Datenspeicher 18 in Verbindung, in dem die Daten 17 der Parameter 16 satzweise abgelegt sind. Die Datengrößen der Daten 17 für den Satz 34 sind beispielsweise a,b,c,d... Für einen anderen Satz 35 sind diese Größen a',b',c',d'... Es ist nun ohne weiteres möglich, einen Satz 34 oder 35 einem Artikel zuzuordnen, also einer herzustellenden Kette für einen vorbestimmten Stoff. Der Schärer braucht dann nur noch mit der Selektionseinrichtung 19 die Satznummer vorzuwählen, um die Daten aus dem Datenspeicher 18 in die Steuereinrichtung 15 zu übertragen, wo sie dann zur Kontrolle mit den Anzeigeeinrichtungen 16' angezeigt werden können. Im Darstellungsfalle sind es die Datenwerte des Satzes 34. In der Figur ist die Selektionseinrichtung 19 symbolisch als einfacher Taster dargestellt. Es versteht sich jedoch, daß die Selektionseinrichtung 19 in der Lage sein muß, allen Anforderungen zu genügen, die Auswahl eines bestimmten Datensatzes 34 zu treffen, diesen an die Steuereinrichtung 15 zu übertragen, ohne ihn im Datenspeicher 18 zu löschen und ohne irgendwelche andere Fehlsteuerungen zu veranlassen. Darüberhinaus muß die Selektionseinrichtung 19 in der Lage sein, über eine Wirkverbindung 19' Einfluß auf ein Schaltelement 22 nehmen zu können, welches sich in einem Einschaltkreis 21 des Trommelantriebs 20 befindet. In diesem Einschaltkreis 21 ist des weiteren ein Einschalter 36 dargestellt, der mit dem Schaltelement 22 in Reihe angeordnet ist. Daraus ergibt sich, daß eine Betätigung des Einschalters 36 nur dann zu einer Betätigung des Trommelantriebs 20 führt, wenn das Schaltelement 22 von der Selektionseinrichtung 19 über die Wirkverbindung 19' eingeschaltet ist. Damit wird sichergestellt, daß die Steuereinrichtung 15 ordnungsgemäß für das Beaufschlagen des Vorschubantriebs 14 vorbereitet bzw. mit Daten 17 versorgt wurde. Des weiteren ist ein Ausschaltkreis 38 des Trommelantriebs 20 dargestellt, der einen Ausschalter 37 zeigt, welcher als Tastschalter symbolisiert wurde. Es versteht sich, daß der Ausschaltkreis 38 im übrigen alle notwendigen Elemente aufweisen muß, um den Trommelantrieb 20 stillzusetzen, nämlich stromlos zu machen und die Schärtrommel 11 abzubremsen. Dieser Ausschalter 37 bewirkt über eine Wirkverbindung 19', daß das Schaltelement 22 zugleich mit der Betätigung des Ausschalters 37 geöffnet wird. Ein nachfolgendes Betätigen des Einschalters 36 führt daher nicht zu einem Wiedereinschalten des Trommelantriebs 20, weil das Schaltelement 22 offen ist. Dieses muß also vor einem Einschalten des Trommelantriebs 20 wieder geschlossen werden, und zwar über die Wirkverbindung 19' mit Hilfe der Selektionseinrichtung 19, durch die die Steuereinrichtung 15 erneut mit einem Datensatz geladen wird, z.B. mit dem Datensatz 34. Hier aber nur, wenn eine neue Kette begonnen wird.

Beim Schären eines Fadenbandes 26 wird der Trommelantrieb 20 erst nach dem Fertigstellen dieses Bandes 26 durch Betätigen des Ausschalters 37 stillgesetzt. Ein derartiger Vorgang kann durchaus überflüssig sein, wenn eine Vielzahl von Fadenbändern 26,26' mit denselben Datensätzen geschärt werden muß, z.B. mit dem Datensatz 34. In diesem Fall kann die Wirkverbindung 19'' so eingerichtet werden, daß nur eine Betätigung des Ausschalters 37 nach dem Fertigstellen aller Fadenbänder 26, 26' zu einem Ausschalten des Schaltelements 22 führt. Es ist auch möglich, die Wirkverbindungen 19'' so auszuführen, daß sie mit einem Umbäumvorgang verknüpft wird, so daß das Schaltelement 22 also nur dann ausgeschaltet wird, nachdem ein Umbäumen des fertiggestellten Wickels 23 mit allen Fadenbändern 26,26' stattgefunden hat. Das Schaltelement 22 kann also in Abhängigkeit von einem Stillsetzen eines Umbäumantriebs erfolgen, wobei ein entsprechendes Ausschaltelement des Umbäumantriebs beispielsweise parallel zum Ausschalter 37 angeordnet ist.

## Patentansprüche

1. Konusschärmaschine (10), bei der die Schärtrommel (11) und/oder ein Support (12) für ein Fadenleitriet (13) unter Berücksichtigung des Konuswinkels (α) und proportional der beim Aufwickeln der Fäden (28) anwachsenden Wikkeldicke (d) seitlich zueinander verschieblich sind, bei der ein motorischer Vorschubantrieb (14) von einer Steuereinrichtung (15) in Abhängigkeit von mehreren schärwirksamen Parametern (16) beaufschlagbar ist, deren für jeden Schärvorgang notwendige garnspezifische Daten (17) aus einem für eine Vielzahl von Parameterdaten (17) bestimmten Datenspeicher (18) mit einer Selektionseinrichtung (19) einlesbar sind, und bei der ein Trommelantrieb (20) nach dem Einlesen von Parameterdaten (17) einschaltbar ist, **dadurch gekennzeichnet**, daß der Trommelantrieb (20) nach einem Schärvorgang und/oder nach einem Umbäumen der Schärkette (23) erst dann wieder einschaltbar ist, wenn zuvor ein Neueinlesen von Parameterdaten (17) in die Steuereinrichtung (15) stattgefunden hat.

2. Konusschärmaschine nach Anspruch 1, **dadurch gekennzeichnet**, daß der Trommelantrieb (20) nach einem Schärvorgang dann wieder einschaltbar ist, wenn der Schärsupport (12) oder die Trommel (11) zur Aufwickelstartstellung zurück verstellt wurde.

3. Konusschärmaschine nach Anspruch 1 oder 2, **dadurch gekennzeichnet**, daß in einem Einschaltkreis (21) des Trommelantriebs (20) ein in Abhängigkeit von einer Betätigung der Selektionseinrichtung (19) einschaltbares Schaltelement (22) vorhanden ist.

4. Konusschärmaschine nach Anspruch 3, **dadurch gekennzeichnet**, daß das Schaltelement (22) des Einschaltkreises (21) des Trommelantriebs (20) in Abhängigkeit von einem Stillsetzen des Trommelantriebs (20) und/oder von einem Stillsetzen eines Umbäumantriebs ausschaltbar ist.

## Claims

1. Sectional warping machine (10), wherein the warp drum (11) and/or a support (12) for a thread guide reed (13) can be displaced laterally with respect to each other under consideration of the cone angle (α) and proportionally to the winding thickness (d) which increases during winding of the threads (28), wherein a motorised advance drive (14) can be acted upon by a control device (15) in dependence upon a number of warp-effective parameters (16), of which the yarn-specific data (17) required for each warp process can be read from a data store (18) designed for a plurality of parameter data (17) using a selection device (19), and wherein a drum drive (20) can be switched on after reading the parameter data (17), characterised in that, after one warp process and/or after one rewinding of the warp chain (23), the drum drive (20) can only be switched on again when a rereading of the parameter data (17) into the control device (15) has first taken place.

2. Sectional warping machine according to claim 1, characterised in that, after one warp process, the drum drive (20) can again be switched on when the warp support (12) or the drum (11) has been set back to the winding start position.

3. Sectional warping machine according to claim 1 or 2, characterised in that in a switch-on circuit (21) of the drum drive (20) a switching element (22) is provided which can be switched on in dependence upon actuation of the selection device (19).

4. Sectional warping machine according to claim 3, characterised in that the switching element (22) of the switch-on circuit (21) of the drum drive (20) can be switched off in dependence upon a shutdown of the drum drive (20) and/or a shutdown of a rewinding drive.

## Revendications

1. Ourdissoir sectionnel à cône (10) dans lequel le tambour ourdisseur (11) et/ou un support (12) pour un peigne guide-fils (13) sont mobiles latéralement l'un par rapport à l'autre en fonction de l'angle de cône (α) et proportionnellement à l'épaisseur d'enroulement (d) augmentant pendant l'enroulement des fils (28), dans lequel un entraînement d'avance par moteur (14) est apte à être sollicité en fonction de plusieurs paramètres actifs pour l'ourdissage (16) par un dispositif de commande (15) dont les données spécifiques (17) concernant le fil nécessaires pour chaque opération d'ourdissage sont aptes à être entrées à partir d'une mémoire de données (18) définie pour plusieurs données de paramètres (17), avec un dispositif de sélection (19), et dans lequel un entraînement de tambour (20) est apte à être mis en marche après l'entrée de données de paramètres (17), **caractérisé** en ce que l'entraînement de tambour (20) ne peut être remis en marche, après une opération d'ourdissage et/ou après un ensouplage de la chaîne d'ourdissage (23), que lorsqu'une nouvelle entrée préalable de données de paramètres (17) dans le dispositif de commande (15) a eu lieu.

2. Ourdissoir sectionnel à cône selon la revendication 1, **caractérisé** en ce que l'entraînement de tambour (20) est apte à être remis en marche, après une opération d'ourdissage, lorsque le support d'ourdissage (12) ou le tambour (11) a été ramené au réglage initial d'enroulement.

3. Ourdissoir sectionnel à cône selon la revendication 1 ou 2, **caractérisé** en ce qu'il est prévu dans un circuit de mise en marche (21) de l'entraînement de tambour (20) un élément de commutation (22) apte à être mis en marche en fonction d'un actionnement du dispositif de sélection (19).

4. Ourdissoir sectionnel à cône selon la revendication 3, **caractérisé** en ce que l'élément de commutation (22) du circuit de mise en marche (21) de l'entraînement de tambour (20) est apte à être mis hors circuit en fonction d'un arrêt de l'entraînement de tambour (20) et/ou d'un arrêt d'un entraînement d'ensouple.
